# EUROPÄISCHE PATENTSCHRIFT

(11) **EP 2 829 851 B1**
(45) Veröffentlichungstag und Bekanntmachung des Hinweises auf die Patenterteilung: **22.02.2017**
(21) Anmeldenummer: 13177422.6
(22) Anmeldetag: 22.07.2013
(51) Int. Cl.: G01F 11/32, G01F 11/34, B65B 1/08, B65B 1/36

(54) **Dosierkopf**
Metering head
Tête de dosage

(43) Veröffentlichungstag der Anmeldung: 28.01.2015
(73) Patentinhaber: Mettler-Toledo GmbH, 8606 Greifensee (CH)
(72) Erfinder: Ehrbar, Sandra, 8604 Volketswil (CH); Meyer, Michael, 8905 Islisberg (CH)
(74) Vertreter: Mettler-Toledo

(56) Entgegenhaltungen:
- EP-A1- 1 930 702
- EP-A1- 2 088 404
- US-A1- 2001 030 205

## Beschreibung

Die vorliegende Erfindung betrifft einen Dosierkopf, welcher als Teil einer Dosiervorrichtung zum Dosieren von fliessfähigen Substanzen, insbesondere von Pulvern und Pasten, verwendet werden kann.

Dosiervorrichtungen werden allgemein dazu verwendet, um genau abgemessene kleine Mengen von kritischen, z.B. toxischen Substanzen in ein Zielgefäss zu dosieren. Dabei ist das Zielgefäss in der Regel auf einer Waage platziert, womit das Gewicht der ausdosierten Substanz während des Dosiervorgangs überwacht und bei Erreichen eines vorgegebenen Sollgewichts die weitere Abgabe von Substanz in das Zielgefäss gestoppt werden kann.

Bei bekannten Geräten wie z.B. der in EP 1930702 A1 beschriebenen Dosiervorrichtung ein zweiteiliger Aufbau erkennen, d.h. einerseits eine Antriebseinheit oder Basiseinheit und andrerseits eine Dosiereinheit, welche in einer Aufnahmevorrichtung oder Halterung der Antriebseinheit in leicht lösbarer und austauschbarer Weise eingesetzt werden kann. Die Dosiereinheit, welche einen Vorrat der zu dosierenden Substanz enthält, umfasst zumindest einen Dosierkopf mit einer Auslassöffnung und mit Bauteilen zum Öffnen und Schliessen der Auslassöffnung sowie gegebenenfalls zum Fördern und Auflockern des pulver- oder pastenförmigen Dosiergutes. Als weiterer Bestandteil der Dosiereinheit kann zur Erweiterung des Vorratsvolumens ein Entnahmegefäss mit dem Dosierkopf verbunden sein.

Die Antriebseinheit in der Dosiervorrichtung von EP 1930702 A1 ist eine feststehende Basis- oder Ständereinheit, welche auf einer Arbeitsfläche aufgestellt wird. Im Betriebszustand ist die Auslassöffnung der eingesetzten Dosiereinheit nach unten gerichtet, und die Organe zum Öffnen und Schliessen der Auslassöffnung sowie gegebenenfalls zum Fördern und Auflockern des pulver- oder pastenförmigen Dosiergutes stehen in lösbarem Eingriff mit Antriebs- oder Betätigungselementen, welche zur Aufnahme- oder Antriebseinheit gehören. Die in die Antriebseinheit eingesetzte Dosiereinheit ist seitlich von der Antriebseinheit abstehend angeordnet, sodass unterhalb der Dosiereinheit Platz für eine Waage zur Verfügung steht. Für weitere Einzelheiten wird auf die Europäische Patentanmeldung EP 1930702 A1 verwiesen, deren Offenbarungsgehalt durch diese Bezugnahme hiermit vollumfänglich in die vorliegende Beschreibung aufgenommmen wird.

Bei der in EP 1930702 A1 beschriebenen Dosiervorrichtung erfolgt das Fördern und Auflockern des pulver- oder pastenförmigen Dosiergutes durch Umrühren mit einem Rührwerk im Dosierkopf und ggf. einem zweiten Rührwerk im Entnahmegefäss. Eine weitere Dosiervorrichtung, welche in EP 1959244 B1 beschrieben wird, zeigt dieselbe Aufbauanordnung mit einer Antriebseinheit an welcher eine Dosiereinheit auswechselbar eingesetzt ist. Die Funktion des Förderns und Auflockerns wird hier jedoch durch Einwirkung von Schlägen auf die Dosiereinheit erzielt, wozu die Antriebseinheit mit einem Schlagwerk, d.h. im Wesentlichen mit einem Hammermechanismus, ausgerüstet ist. Diese Lösung erweist sich insbesondere als vorteilhaft bei gewissen pulverförmigen Dosiergütern wie z.B. Maisstärke, die sich beim Einsatz eines Rührwerks verdichten anstatt aufgelockert zu werden, sodass der Materialfluss durch den Dosierkopf blockiert wird und somit trotz vollständig geöffneter Auslassmündung kein Dosiergut aus dem Dosierkopf ausgetragen werden kann. Für weitere Einzelheiten dieser Dosiervorrichtung mit Schlagwerk wird auf das Europäische Patent EP 1959244 B2 verwiesen, dessen Offenbarungsgehalt durch diese Bezugnahme hiermit vollumfänglich in die vorliegende Beschreibung aufgenommmen wird.

In EP 2088404 A1 wird ein Dosierkopf gemäß dem Oberbegriff des Anspruchs 1 beschrieben, bei welchem der Bereich der Auslassöffnung aus elastischem Material besteht, sodass sich der z.B. schlitzförmige Auslass durch mechanische Einwirkung spreizen und durch Wegnahme der elastischen Einwirkung schliessen lässt. Des Weiteren werden verschiedene Ausführungen von Fördermitteln sowie mit den Fördermitteln zusammenwirkende Gestaltungen der Innenwand des Dosierkopfes dargestellt.

Alle der vorstehend genannten Beispiele aus dem Stand der Technik zeigen den oben erwähnten zweiteiligen Grundaufbau aus einer Antriebseinheit und einer in die Antriebseinheit einsetzbaren Dosiereinheit. Dabei ist das leichte Einsetzen und Herausnehmen beziehungsweise Austauschen der Dosiereinheit ein besonders wichtiger Aspekt. Eine mit der Antriebseinheit verbundene Aufnahmevorrichtung, in der die Dosiereinheit eingesetzt und sicher festgehalten werden kann, wird in EP 1959243 B1 beschrieben.

In den bekannten Dosiervorrichtungen des Standes der Technik ist jeweils die Dosiereinheit, welche den Dosierkopf allein oder einen Dosierkopf mit angeschlossenem Entnahmegefäss umfassen kann, für langzeitigen und vielfach wiederholten Gebrauch konstruiert, d.h. als eine Einheit welche immer wieder mit der gleichen oder einer anderen Dosiersubstanz nachgefüllt und dazwischen auch gereinigt werden kann.

In der Praxis hat sich jedoch ein bisher nicht gedeckter Bedarf nach einer kostengünstigen, kompakten, vorzugsweise aus dem Dosierkopf allein bestehenden Dosiereinheit gezeigt, welche z.B. für wenige Dosierzyklen der gleichen Substanz verwendet und anschliessend mit dem darin verbleibenden Substanzrest entsorgt werden kann. Eine solche entsorgbare Dosiereinheit ist insbesondere für das Dosieren von toxischen Substanzen sehr vorteilhaft.

Es ist deshalb die Aufgabe der vorliegenden Erfindung, einen Dosierkopf zu schaffen, welcher als Teil einer Dosiervorrichtung der z.B. in EP 1930702 A1 beschriebenen Art zum Dosieren von fliessfähigen pulver- und pastenförmigen Substanzen eingesetzt werden kann, wobei der Dosierkopf insbesondere für kleine Füllmengen (typischerweise weniger als 2 Gramm) ausgelegt und so kostengünstig herstellbar sein soll, dass er nach Verwendung gegebenenfalls als Verbrauchsartikel entsorgt werden kann.

Gelöst wird diese Aufgabe durch einen Dosierkopf mit den Merkmalen gemäss dem unabhängigen Hauptanspruch 1. Weitere Ausgestaltungen und Verkörperungen des Erfindungsgegenstandes ergeben sich aus den Unteransprüchen.

Ein Dosierkopf zum Dosieren von fliessfähigem Dosiergut umfasst ein Gehäuse mit einem das Dosiergut aufnehmenden Innenraum, einer Füllöffnung und einer Auslassöffnung, sowie einen im Gehäuse angeordneten Verschlussdorn welcher zum Öffnen und Schliessen der Auslassöffnung und zum Lockern und Fördern des Dosiergutes in Richtung einer Verschlussdornachse verschiebbar und um die Verschlussachse drehbar ist. Der Dosierkopf kann insbesondere eine Dosierposition und eine von der Dosierposition verschiedene Füllposition einnehmen, wobei das Dosiergut in der Füllposition durch die Füllöffnung eingefüllt und in der Dosierposition durch die Auslassöffnung ausdosiert werden kann. Insbesondere ist in der Dosierposition, in welcher der Verschlussdorn im Wesentlichen senkrecht ausgerichtet ist und die Auslassöffnung zuunterst am Dosierkopf liegt, die Füllöffnung seitlich am Gehäuse angeordnet und im Wesentlichen vertikal ausgerichtet. Der Dosierkopf hat ferner eine ebenfalls seitlich angeordnete und der Füllöffnung diametral gegenüberliegende Auflagefläche, welche dazu dient, dass der Dosierkopf in der gegenüber der Dosierposition im Wesentlichen um 90° gekippten Füllposition mit nunmehr horizontal ausgerichteter und obenliegender Füllöffnung auf einer Arbeitsfläche stabil aufgelegt werden kann. Ausserdem umfasst der Dosierkopf einen Deckel zum Verschliessen der Füllöffnung.

Im Vergleich zu den eingangs beschriebenen Dosiereinheiten und Dosierköpfen des Standes der Technik erlaubt die erfinderische, in Bezug auf die Dosierposition seitliche Anordnung der Füllöffnung und der diametral gegenüberliegenden Auflagefläche ein besonders einfaches Befüllen des Dosierkopfes und gegebenenfalls auch eine einfache Lagerung, da dank der Auflagefläche keine besonderen Gestelle oder Halterungen zum Aufbewahren oder auch nur zum kurzzeitigen Ablegen gefüllter Dosierköpfe benötigt werden.

Vorteilhafterweise ist an dem in Dosierposition oberen Ende des Dosierdorns eine Kupplung angeordnet, mit welcher eine Antriebswelle einer Antriebseinheit zum Antrieb der axialen Verschiebung und Drehung des Verschlussdorns in lösbaren Eingriff gebracht werden kann.

Der erfindungsgemässe Dosierkopf umfasst vorzugsweise eine Schnappverbindung zwischen dem Deckel und dem Gehäuse, wodurch im geschlossenen Zustand der Deckel in der Füllöffnung gesichert wird.

Die Füllöffnung und der Deckel in vorteilhaften Ausführungsformen haben bevorzugt kontinuierlich verlaufende komplementäre Passkonturen von z.B. runder oder insbesondere elliptischer Form. Im Vergleich zu einer z.B. rechteckingen Form des Deckels und der Füllöffnung ergibt sich ein leichteres Einschnappen. Gegenüber einer kreisrunden Form ist jedoch eine elliptische Kontur des Deckels und dementsprechend auch der Füllöffnung bevorzugt, weil damit für das Einsetzen des Deckels zwangsläufig eine bestimmte Orientierung vorgegeben werden kann. Eine elliptische Kontur bietet den Vorteil, dass die Füllöffnung angepasst auf die rechteckige Aussenfläche gross ist und somit das Einfüllen einfach ist, ohne dass die Kontur Ecken aufweist und die Kontur einen kontinuierlichen, stetigen Verlauf aufweist. Die lange Achse der Ellipse ist im Wesentlichen gleich ausgerichtet wie die lange Seite der im Wesentlichen rechteckigen Aussenfläche des Dosierkopfs.

Der Innenraum des Dosierkopfes hat vorzugsweise zumindest im Bereich der Füllöffnung eine zylindrische Innenwand, und eine im geschlossenen Zustand dem Innenraum zugewandte Innenseite des Deckels ist vorzugsweise ebenfalls zylindrisch und an die Innenwand bündig anschliessend geformt. Diese Formgebung ist besonders vorteilhaft, da dadurch Kanten, Fugen und andere Unregelmässigkeiten im Innenraum des Dosierkopfs vermieden werden, an welchen sich Dosiergut während des Dosiervorganges anlagern könnte.

In vorteilhaften Ausführungsformen weist das Gehäuse auf der Seite der Füllöffnung eine als Aufnahmesitz für den Deckel dienende Vertiefung auf, in welcher der Deckel dann gelagert werden kann, wenn er nicht in der Füllöffnung eingesetzt ist, also z.B. während des Befüllens oder auch an einem leeren, entweder fabrikneuen oder gereinigten Dosierkopf. Nach dem Befüllen wird der Deckel aus der Vertiefung entnommen und zum Verschliessen in die Füllöffnung eingesetzt und durch Einschnappen gesichert. Erst dann wird der Dosierkopf aus der Füllposition geschwenkt und in Dosierposition in die Antriebseinheit einer Dosiervorrichtung eingesetzt.

Ferner kann am Gehäuse des Dosierkopfes eine Aufnahme für ein Identifikationsmittel, beispielsweise für einen RFID-Transponder, angeordnet sein, auf welchem Daten betreffend die in der Dosiereinheit enthaltene Dosiersubstanz gespeichert sind. Zweckmässigerweise ist die Aufnahme so gestaltet, dass das Identifikationsmittel ohne Zuhilfenahme eines Werkzeugs am Gehäuse befestigt, beziehungsweise aus demselben entfernt werden kann.

In bevorzugten Ausführungsformen des Dosierkopfes ist mindestens ein Rührelement am Verschlussdorn angeformt, welches zur Auflockerung des Dosierguts und zur Verhinderung einer Klumpenbildung dient.

Das Gehäuse des Dosierkopfes ist vorteilhafterweise zweiteilig konstruiert, wobei ein erstes Gehäuseteil und ein zweites Gehäuseteil mittels eines Formschlusses und ohne Zuhilfenahme eines Werkzeugs verbindbar sind. Die formschlüssige Verbindung zwischen dem ersten und zweiten Gehäuseteil ist bevorzugt als Schnappverbindung ausgebildet.

Das in Dosierposition obere Ende des Verschlussdorns wird in einer axialen Durchgangsöffnung des Dosierkopfs mittels einer vorzugsweise zylindrischen Verschlussdornkappe zentrisch geführt. Bevorzugterweise ist die Verschlusskappe auf das in Dosierposition obere Ende des Verschlussdorns aufstülpbar und durch eine formschlüssige Schnappverbindung mit dem Verschlussdorn verbindbar.

In dem erfindungsgemässen Dosierkopf ist eine Rückstellfeder vorzugsweise so angeordnet, dass ein in Dosierposition unteres Ende der Rückstellfeder gegen den zweiten Gehäuseteil und ein oberes Ende gegen die Verschlussdornkappe abgestützt ist und der Verschlussdorn durch eine Vorspannung der Rückstellfeder in eine durch einen axialen Anschlag des Verschlussdorns definierte Ruhestellung gedrängt wird und auf diese Weise der Dosierkopf verschlossen wird.

Einzelheiten des erfindungsgemässen Dosierkopfes ergeben sich anhand der Beschreibung der in den Zeichnungen dargestellten Ausführungsbeispiele. Es zeigen:
- Figur 1: eine Explosionsdarstellung eines erfindungsgemässen Dosierkopfs;
- Figur 2: den Dosierkopf von Figur 1 mit Blick auf die Füllöffnung;
- Figur 3: den Dosierkopf von Figur 1 mit Blick auf die Auflagefläche und das in die Aufnahme eingesetzte Identifikationsmittel;
- Figur 4: den Dosierkopf von Figur 1 in einem Schnitt entlang der Verschlussdornachse;
- Figur 5: eine Dosiervorrichtung mit einem erfindungsgemässen Dosierkopf;
- Figur 6: den Deckel der Füllöffnung eines erfindungsgemässen Dosierkopfs in verschiedenen Blickrichtungen; und
- Figur 7: den Dosierkopf von Figur 1 mit wahlweise anschliessbarem Entnahmegefäss.

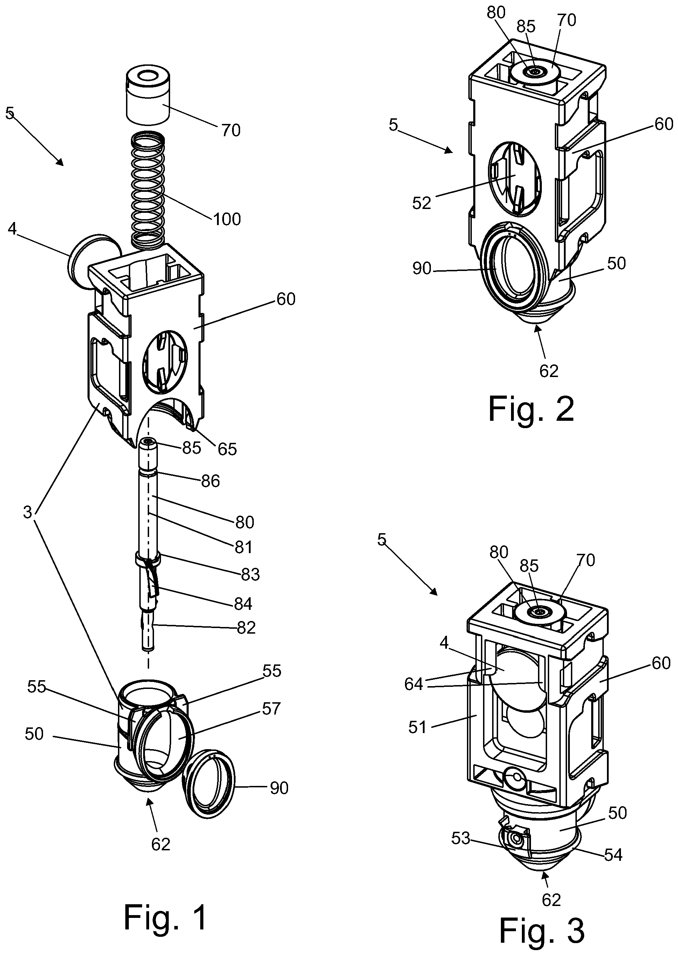

Figur 1 zeigt eine bevorzugte Ausführungsform des erfindungsgemässen Dosierkopfs 5 in einer Explosionsdarstellung. Man erkennt darin den zweiteiligen Aufbau des Dosierkopfgehäuses 3 mit einem ersten, in Dosierposition unteren Gehäuseteil 50 und einem zweiten, in Dosierposition oberen Gehäuseteil 60. Am ersten Gehäuseteil 50 befinden sich die in Dosierposition zuunterst liegende Auslassöffnung 62 sowie die in Dosierposition seitlich angeordnete und sich im Wesentlichen vertikal erstreckende Füllöffnung 57, welche mit dem Deckel 90 verschliessbar ist, wobei der Sitz des Deckels 90 in der Füllöffnung 57 zweckmässigerweise durch eine Schnappverbindung gesichert werden kann. Ausserdem sind zwei Führungsschienen 55 am ersten Gehäuseteil 50 zu beiden Seiten der Füllöffnung angeordnet, welche beim Zusammenfügen des ersten Gehäuseteils 50 und des zweiten Gehäuseteils 60 in die Führungsbahnen 65 des oberen, zweiten Gehäuseteils 60 eingesetzt werden und dadurch die genaue Ausrichtung der beiden Gehäuseteile 50 und 60 zueinander gewährleisten. Das zweite Gehäuseteil 60 weist auf der in Figur 1 vorne liegenden Seite eine Vertiefung 52 auf, in welcher der Deckel 90 dann aufbewahrt werden kann, wenn er nicht in der Füllöffnung 57 eingesetzt ist, also z.B. während des Transportes oder des Befüllens oder auch an einem leeren, entweder fabrikneuen oder gereinigten Dosierkopf.

Weiterhin zeigt Figur 1 den Verschlussdorn 80, welcher im Betrieb des Dosierkopfes 5 um die Verschlussdornachse 81 drehbar sowie in Richtung der Verschlussdornachse 81 auf und ab bewegbar ist. Die weiteren in Figur 1 mit Bezugszeichen identifizierten Einzelheiten des Verschlussdorns 80 sowie die Rückstellfeder 100, die Verschlussdornkappe 70 und das Identifikationsmittel 4 werden im Zusammenhang mit den nachfolgenden Figuren 2 bis 4 erklärt.

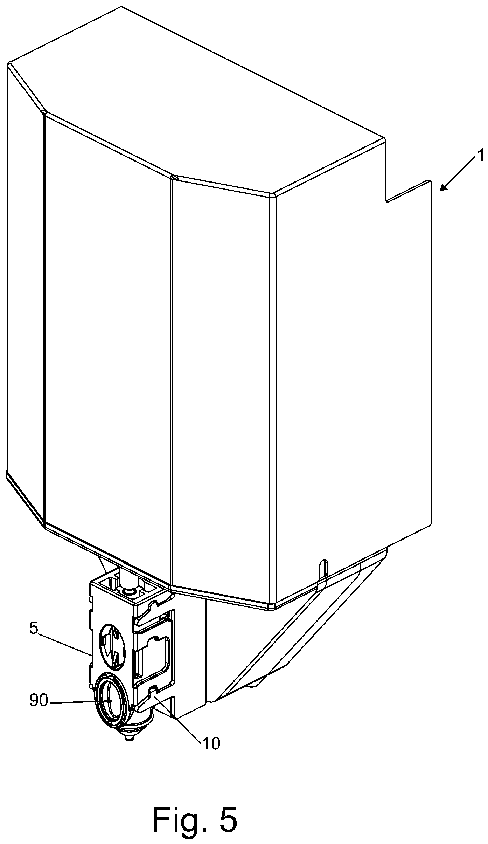

Figur 2 zeigt den Dosierkopf 5 von Figur 1 mit den Gehäuseteilen 50 und 60 im zusammengesetzten Zustand in Dosierposition mit Blick auf die mit dem Deckel 90 verschlossene Füllöffnung 57. Oberhalb der mit dem Deckel 90 verschlossenen Füllöffnung liegt die Vertiefung 52 welche als Aufnahmesitz zur Aufbewahrung des Deckels 90 dient, wobei der sichere Halt des Deckels 90 in der Vertiefung 52 vorteilhafterweise durch eine leicht lösbare Schnappverbindung gewährleistet werden kann. Auf der in den Figuren 2 und 3 nach oben weisenden Seite des Dosierkopfs 5 erkennt man die Verschlussdornkappe 70, welche durch einen Schnappsitz am Verschlussdorn 80 befestigt ist. Das im Zentrum der Verschlussdornkappe 70 sichtbare stirnseitige Ende des Verschlussdorns 80 ist als Kupplung 85 gestaltet, mit welcher eine Antriebswelle 11 einer Dosiereinheit 1 (siehe Figur 5) zum Antrieb der axialen Verschiebung und Drehung des Verschlussdorns 80 in lösbaren Eingriff gebracht werden kann.

In Figur 3 wird die der Füllöffnung 57 entgegengesetzte Seite des Dosierkopfs 5 gezeigt, welche in ihrem gesamten Randbereich als Auflagefläche 51 ausgeführt ist und, wie bereits beschrieben, dazu dient, dass der Dosierkopf 5 in der gegenüber der Dosierposition im Wesentlichen um 90° gekippten Füllposition mit nunmehr horizontal ausgerichteter und obenliegender Füllöffnung 57 auf einer Arbeitsfläche stabil aufgelegt werden kann. In einer von der Auflagefläche 51 umschlossenen Vertiefung 58 erkennt man, dass in eine Aufnahme 64 eingesetzte Identifikationsmittel 4, welches beispielsweise aus einem RFID Transponder bestehen kann. Ausserdem ersichtlich ist in Figur 3 eine Kontaktstelle 53 zur Ableitung statischer Ladungen, die sich während des Betriebs in dem aus Kunststoff konstruierten Dosierkopf 5 aufbauen und durch elektrostatische Kohäsion des Dosiergutes dessen Austrag aus dem Dosierkopf behindern könnten. Das erste Gehäuseteil 50 in der abgebildeten Ausführungsform ist zur Hauptsache zylindrisch und verjüngt sich in seinem untersten Abschnitt konisch zur Auslassöffnung 62 hin. Am Übergang von der zylindrischen zur konischen Form befindet sich ein Abschlussring 54, welcher eine Dichtungsfunktion erfüllt, wenn der konische Teil des Dosierkopfs in eine entsprechende kreisrunde Öffnung in der Deckwand eines Windschutzgehäuses (nicht abgebildet) eingesetzt wird, in welchem sich ein die ausdosierte Substanz aufnehmendes Zielgefäss befindet.

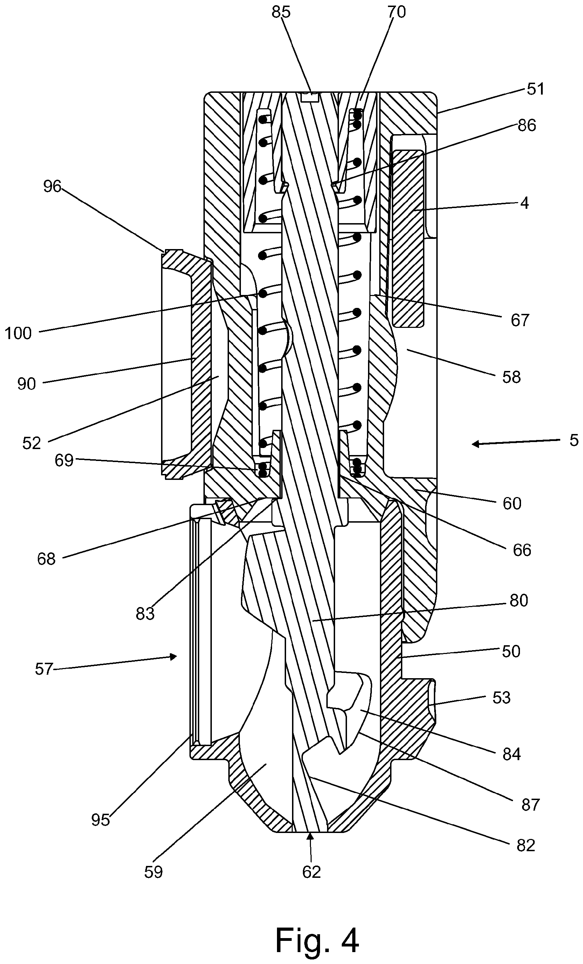

In der Schnittdarstellung von Figur 4 ist insbesondere die Anordnung des Verschlussdorns 80 im Dosierkopf 5 ersichtlich. Bei der Montage des Dosierkopfs 5 aus seinen Einzelteilen 50, 60, 70, 80, 90, 100 wird zunächst der Dosierdorn 80 von unten (in Bezug auf Figur 4) in die axiale Durchgangsöffnung 66 des zweiten Gehäuseteils 60 eingeführt, bis der Anschlag 83 des Verschlussdorns 80 an der Schulter 68 der Durchangsöffnung 66 anschlägt. Sodann wird die Rückstellfeder 100 vom oberen Ende der axialen Durchgangsöffnung 66 her über den Verschlussdorn 80 und bis auf den Grund des ringförmigen Aufnahmesitzes 69 gestülpt, worauf die Verschlussdornkappe 70 unter Zusammendrücken der Rückstellfeder 100 auf den Verschlussdorn 80 und die Rückstellfeder 100 aufgestülpt und durch Einschnappen in der Rille 86 des Verschlussdorns 80 gesichert wird. Anschliessend wird das erste Gehäuseteil 50 in das zweite Gehäuseteil 60 eingesetzt und durch Einschnappen gesichert. Ebenso wird der Deckel 90 in die Vertiefung 52 des zweiten Gehäuseteils eingesetzt, wo er bis zur Ingebrauchnahme des Dosierkopfs durch eine leicht lösbare Schnappverbindung festgehalten wird. Ein Identifikationsmittel 4, z.B. eine RFID Transpondereinheit, kann ebenfalls bei der Montage des Dosierkopfs 5 in die Vertiefung 58 eingesetzt werden. In Figur 4 nach rechts vom ersten Gehäuseteil 50 abstehend ist die Kontaktstelle 53 angeordnet, welche durch elektrischen Kontakt mit der Dosiervorrichtung 1 (siehe Figur 5) elektrostatische Ladungen aus dem ersten Gehäuseteil 50 in die geerdete Dosiervorrichtung 1 ableitet. Damit diese Ladungsableitung stattfinden kann, ist vorgesehen, das erste Gehäuseteil 50 mit der Kontaktstelle 53 aus einem elektrisch leitenden Werkstoff herzustellen. Vorteilhafterweise besteht die Kontaktstelle aus elektrisch leitendem Kunststoff.

In dem in Figur 4 gezeigten Ruhezustand des Dosierkopfs 5 wird der Verschlussdorn 80 mit seinem Anschlag 83 durch die Vorspannung der Rückstellfeder 100 gegen die Schulter 68 am unteren Ende der axialen Durchgangsöffnung 66 gedrückt, wobei das in Figur 4 obere Ende des Verschlussdorns 80 mit der daran befestigten Verschlussdornkappe 70 mit der oberen Stirnfläche des Dosierkopfs 5 bündig zu liegen kommt und das untere Ende des Verschlussdorns 80 die Auslassöffnung 62 ausfüllt und damit verschliesst.

Weiterhin lässt sich anhand der Figuren 4 und 5 die Funktionsweise des Verschlussdorns 80 erklären. Um eine Dosierung auszuführen wird ein gefüllter Dosierkopf 5 in die Aufnahmevorrichtung 10 (Figur 5) einer Dosiervorrichtung 1 eingesetzt. Unterhalb des Dosierkopfs 5 wird sich typischerweise ein auf einer Waage stehendes Zielgefäss befinden (nicht abgebildet). In dem meist automatisch gesteuerten Dosiervorgang wird die Antriebswelle 11, welche um ihre Achse rotieren und gegebenenfalls gleichzeitig eine vertikal pulsierende Schlagbewegung ausführen kann, zum Dosierkopf 5 hin abgesenkt und mit der Kupplung 85 des Verschlussdorns 80 zum Eingriff gebracht. Nach erfolgtem Eingriff drückt die Antriebswelle 11 den Verschlussdorn 80 gegen die Vorspannkraft der Rückstellfeder 100 weiter nach unten, wobei sich die Rotation und gegebenenfalls die überlagerte axiale Schlagbewegung der Antriebswelle 11 auf den Verschlussdorn 80 übertragen. Durch die Abwärtsverschiebung der Aussparung 82 wird ein variabel kontrollierbarer Anteil des Auslassöffnungsquerschnitts für den Ausfluss von Dosiergut freigegeben. Gleichzeitig wird das Dosiergut im Innenraum 59 des ersten Gehäuseteils 50 durch die Rotation und gegebenenfalls die zusätzliche axiale Schlagbewegung mindestens eines am Verschlussdorn 80 angeformten Rührelements 84 gelockert und zur Auslassöffnung 62 hin gefördert. Insbesondere bei der maximal möglichen Abwärtsverschiebung des Verschlussdorns, welche durch das Anschlagen der Verschlusskappe 70 am zweiten Absatz 67 des zweiten Gehäuseelements 60 begrenzt wird, gleitet die passend geformte Aussenkante 87 des Rührelements 84 entlang der Innenwandfläche im Umkreis der Auslassöffnung 62, wodurch in diesem Bereich befindliches Dosiergut weggewischt und zur Auslassöffnung 62 hin befördert wird.

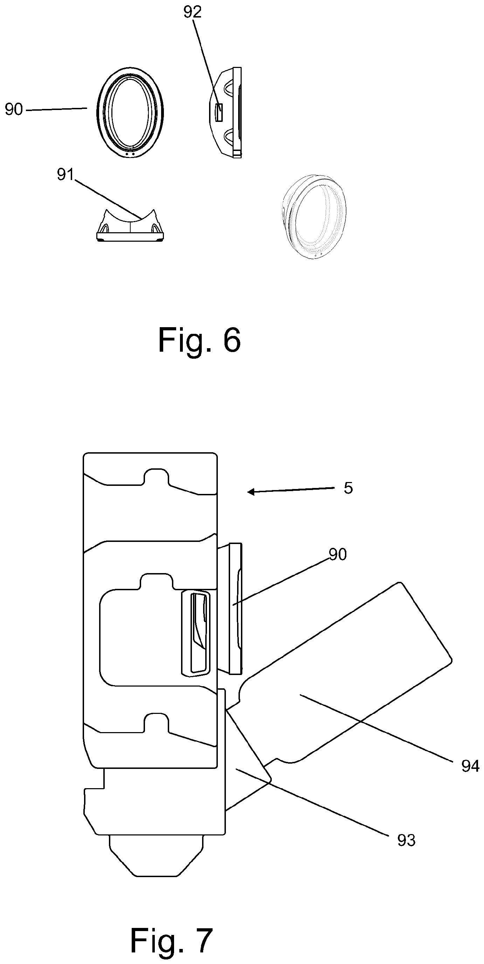

Figur 6 zeigt den Deckel 90 der Füllöffnung in drei Normalprojektionen und in perspektivischer Ansicht. Darin ist eine von zwei gegenüberliegenden Kerben 92 erkennbar, welche den Deckel 90 durch leicht lösbaren Schnappeingriff mit entsprechend geformten Vorsprüngen in der Vertiefung 52 festhalten. In der Füllöffnung 57 wird der Deckel 90 dagegen im Wesentlichen entlang seines ganzen Umfangs befestigt und abgedichtet. Diese Befestigung und Dichtung kann z.B. dadurch erzielt werden, dass ein Grat 95 (s. Figur 4) entlang des Innenumfangs der Füllöffnung 57 an einem passend geformten umlaufenden Absatz 96 entlang der Aussenkante des Deckels 90 einschnappt. Die zylindrische Innenoberfläche 91 des Deckels ist so gestaltet, dass sie sich praktisch übergangslos in die zylindrische Wandung des Innenraums 59 einfügt.

Figur 7 zeigt wiederum den Dosierkopf 5 von Figur 1, jedoch ist in der Füllöffnung 57 anstelle des Deckels 90 ein Adapter 93 eingesetzt, durch welchen ein Entnahmegefäss 94 an den Dosierkopf 5 angeschlossen werden kann. Der nicht benützte Deckel 90 bleibt dabei in der Vertiefung 52.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Dosiervorrichtung
- 3: Gehäuse des Dosierkopfs 5
- 4: Identifikationsmittel, RFID Transponder
- 5: Dosierkopf
- 10: Aufnahmevorrichtung
- 11: Antriebswelle
- 50: Erstes Gehäuseteil
- 51: Auflagefäche
- 52: Vertiefung zur Aufbewahrung des Deckels 90
- 53: Kontaktstelle zur Ladungsableitung
- 54: Ring
- 55: Führungsschienen
- 57: Füllöffnung
- 58: Vertiefung zur Aufnahme von 4
- 59: Innenraum des ersten Gehäuseteils 50
- 60: Zweites Gehäuseelement
- 62: Auslassöffnung
- 64: Aufnahme für das Identifikationsmittel 4
- 65: Führungsbahnen
- 66: axiale Durchgangsöffnung von 60
- 67: Absatz von 66
- 68: Schulter am unteren Ende von 66
- 69: Aufnahmesitz für die Rückstellfeder 100
- 70: Verschlussdornkappe
- 80: Verschlussdorn
- 81: Verschlussdornachse
- 82: Aussparung im Verschlussdorn
- 83: Anschlag des Verschlussdorns
- 84: Rührelement
- 85: Kupplung
- 86: Rille
- 87: Aussenkante von 84
- 90: Deckel
- 91: Innenoberfläche des Deckels
- 92: Kerbe
- 93: Adapter
- 94: Entnahmegefäss
- 95: umlaufender Grat
- 96: umlaufender Absatz
- 100: Rückstellfeder

## Patentansprüche

1. Dosierkopf (5), welcher in einer Dosiervorrichtung (1) zum Dosieren von fliessfähigem Dosiergut einsetzbar ist und welcher ein Gehäuse (3) mit einem das Dosiergut aufnehmenden Innenraum (59), einer Auslassöffnung (62), sowie einen im Gehäuse (3) angeordneten Verschlussdorn (80) umfasst, der zum Öffnen und Schliessen der Auslassöffnung (62) und zum Lockern und Fördern des Dosiergutes in Richtung einer Verschlussdornachse (81) verschiebbar und um die Verschlussachse (81) drehbar ist, wobei der Dosierkopf (5) eine Dosierposition mit im Wesentlichen senkrechter Orientierung des Verschlussdorns (80) zum Ausdosieren des Dosierguts durch die zuunterst am Dosierkopf (5) liegende Auslassöffnung (62) einnehmen kann, **dadurch gekennzeichnet, dass** der Dosierkopf eine Füllöffnung umfasst, dass in der Dosierposition die Füllöffnung (57) seitlich am Gehäuse (3) angeordnet ist und sich im Wesentlichen vertikal erstreckt, dass der Dosierkopf (5) eine in Dosierposition ebenfalls seitlich angeordnete und der Füllöffnung (57) diametral gegenüberliegende Auflagefläche (51) besitzt, dass der Dosierkopf (5) durch Kippen um 90° aus der Dosierposition in eine von der Dosierposition verschiedene Füllposition zum Einfüllen des Dosierguts durch die Füllöffnung (57) bringbar ist, in welcher der Dosierkopf (5) mit nunmehr obenliegender und sich im Wesentlichen horizontal erstreckender Füllöffnung (57) auf der Auflagefläche (51) ruhen kann, dass die Füllöffnung (57) mittels eines Deckels (90) verschliessbar ist, dass der Innenraum (59) des Dosierkopfes (5) eine zumindest im Bereich der Füllöffnung (57) zylindrische, sich in Richtung der Auslassöffnung axial erstreckende Innenwand aufweist, und dass eine im geschlossenen Zustand dem Innenraum (59) zugewandte Innenoberfläche (91) des Deckels (90) ebenfalls zylindrisch und an die Innenwand bündig anschliessend geformt ist.

2. Dosierkopf (5) nach Anspruch 1, **dadurch gekennzeichnet, dass** mindestens ein Rührelement (84) am Verschlussdorn (80) angeformt ist, welches zur Auflockerung des Dosierguts und zur Verhinderung einer Klumpenbildung dient.

3. Dosierkopf (5) nach Anspruch 1 oder 2, **dadurch gekennzeichnet, dass** an dem in Dosierposition oberen Ende des Dosierdorns (80) eine Kupplung (85) angeordnet ist, mit welcher eine Antriebswelle (11) der Dosiervorrichtung (1) zum Antrieb einer axialen Verschiebung und Drehung des Verschlussdorns (80) in lösbaren Eingriff gebracht werden kann.

4. Dosierkopf (5) nach einem der vorangehenden Ansprüche, **dadurch gekennzeichnet, dass** der Dosierkopf (5) eine Schnappverbindung (95, 96) zwischen dem Deckel (90) und dem Gehäuse (3) umfasst, wodurch im geschlossenen Zustand der Deckel (90) in der Füllöffnung (57) gesichert und abgedichtet wird.

5. Dosierkopf (5) nach Anspruch 4, **dadurch gekennzeichnet, dass** die Füllöffnung (57) und der Deckel (90) kontinuierlich verlaufende komplementäre Umfangskonturen aufweisen.

6. Dosierkopf (5) nach Anspruch 5, **dadurch gekennzeichnet, dass** die Füllöffnung (57) und der Deckel (90) eine elliptische Umfangskontur aufweisen.

7. Dosierkopf (5) nach einem der vorangehenden Ansprüche,
**dadurch gekennzeichnet, dass** das Gehäuse (3) auf der Seite der Füllöffnung (57) eine als Aufnahmesitz für den Deckel (90) dienende Vertiefung (52) aufweist, in welcher der Deckel (90) gelagert werden kann, wenn er nicht in der Füllöffnung (57) eingesetzt ist.

8. Dosierkopf (5) nach einem der vorangehenden Ansprüche,
**dadurch gekennzeichnet, dass** am Gehäuse (3) des Dosierkopfs (5) eine Aufnahme (64) für ein Identifikationsmittel (4) angeordnet ist, auf welchem Daten betreffend die im Dosierkopf (5) enthaltene Dosiersubstanz speicherbar sind, und ferner dass die Aufnahme (64) und das Identifikationsmittel so gestaltet sind, dass das Identifikationsmittel (4) ohne Zuhilfenahme eines Werkzeugs am Gehäuse (3) befestigt, beziehungsweise aus demselben entfernt werden kann.

9. Dosierkopf (5) nach einem der Ansprüche 1 bis 8, **dadurch gekennzeichnet, dass** das Gehäuse (3) des Dosierkopfes (5) zweiteilig konstruiert ist, wobei ein erstes Gehäuseteil (50) und ein zweites Gehäuseteil (60) mittels eines Formschlusses und ohne Zuhilfenahme eines Werkzeugs miteinander verbindbar sind.

10. Dosierkopf (5) nach Anspruch 9, **dadurch gekennzeichnet, dass** das erste Gehäuseteil (50) und das zweite Gehäuseteil (60) mittels einer Schnappverbindung miteinander verbindbar sind.

11. Dosierkopf (5) nach einem der Ansprüche 1 bis 10,
**dadurch gekennzeichnet, dass** das in Dosierposition obere Ende des Verschlussdorns (80) in einer axialen Durchgangsöffnung (66) des Dosierkopfs (5) mittels einer vorzugsweise zylindrischen Verschlussdornkappe (70) zentrisch geführt ist.

12. Dosierkopf (5) nach Anspruch 11, **dadurch gekennzeichnet, dass** die Verschlusskappe (70) auf das in Dosierposition obere Ende des Verschlussdorns (80) aufstülpbar und durch eine formschlüssige Schnappverbindung mit dem Verschlussdorn verbindbar ist.

13. Dosierkopf (5) nach Anspruch 11, **dadurch gekennzeichnet, dass** im Dosierkopf (5) eine Rückstellfeder (100) in Form einer den Verschlussdorn (80) konzentrisch umschliessenden Schraubendruckfeder angeordnet ist, welche sich an ihrem in Dosierposition unteren Ende gegen das zweite Gehäuseteil (60) und an ihrem in Dosierposition oberen Ende gegen die Verschlussdornkappe (70) abstützt, und dass der Verschlussdorn (80) durch eine Vorspannung der Rückstellfeder (100) axial nach oben in eine durch einen Anschlag (83) des Verschlussdorns (80) definierte Ruhestellung gedrängt wird.

14. Dosierkopf (5) nach einem der vorangehenden Ansprüche, **dadurch gekennzeichnet, dass** der Dosierkopf (5) eine elektrisch leitenden Kontaktstelle (53) zur Landungsableitung aufweist.

## Claims

1. Dosage-dispensing head (5) for use in a dosage-dispensing device (1) to dispense measured quantities of free-flowing dosage material, which comprises a housing (3) with an interior space (59) to receive the dosage material, a fill opening (57) and a discharge orifice (62) as well as a shutter bolt (80) arranged in the housing (3), wherein the shutter bolt (80) is movable in the direction of a shutter bolt axis (81) and rotatable about said shutter bolt axis (81) to perform the functions of opening and closing the discharge orifice (62) and of loosening and advancing the dosage material, wherein the dispensing head (5) can take on a dispensing position with a substantially vertical orientation of the shutter bolt (80) and a fill position that is different from the dispensing position, wherein in the dispensing position the dosage material can be dispensed through the discharge orifice (62) at the lower end of the dispensing head (5), and in the fill position it can be filled in through the fill opening (57), **characterized in that** in the dispensing position the fill opening (57) is positioned laterally extended on the housing (3) in an essentially vertical orientation, further that the dispensing head (5) has a likewise laterally extended rest surface (51) diametrically opposite the fill opening, that the dosage-dispensing head (5), through a tilt movement of substantially 90°, can be brought from the dispensing position into the fill position, where the dosage-dispensing head (5) lies on its rest surface (51) with the fill opening (57) located on top in horizontal extended orientation, and further that the fill opening (57) can be closed by means of a cap (90) and the interior space (59) of the dosage-dispensing head (5), at least in the area of the fill opening (57), has a cylindrical inside wall, and that the internal surface (91) of the cap (90), which in the closed state faces towards the interior space (59), is preferably also of cylindrical shape with a flush transition to the interior wall.

2. Dosage-dispensing head (5) according to claim 1, **characterized in that** at least one stirrer element (84) is formed on the shutter bolt (80), which serves to loosen up the dosage material and to prevent the formation of lumps.

3. Dosage-dispensing head (5) according to claim 1 or 2, **characterized in that** a clutch (85) is arranged at the upper end of the shutter bolt (80) relative to the dispensing position, through which a drive shaft (11) of the dosage-dispensing device (1) can be releasably engaged to drive an axial displacement and rotation of the shutter bolt (80).

4. Dosage-dispensing head (5) according to one of the preceding claims, **characterized in that** the dosage-dispensing head (5) comprises a snap connection (95, 96) between the cap (90) and the housing (3), whereby in the closed state the cap (90) is secured and sealed in the fill opening (57).

5. Dosage-dispensing head (5) according to claim 4, **characterized in that** the fill opening (57) and the cap (90) have smoothly curved complementary perimeter contours.

6. Dosage-dispensing head (5) according to claim 5, **characterized in that** the fill opening (57) and the cap (90) have elliptical perimeter contours.

7. Dosage-dispensing head (5) according to one of the preceding claims, **characterized in that** the housing (3), on the same side as the fill opening (57), has a recess (52) in which the cap (90) can be stored when it is not seated in the fill opening (57).

8. Dosage-dispensing head (5) according to one of the preceding claims, **characterized in that** the housing (3) of the dosage-dispensing head (5) comprises a seat (64) for a means of identification (4) on which data are stored concerning the dosage substance contained in the dosage-dispensing head (5), and further that the seat (64) and the means of identification (4) are designed in such a way that the means of identification (4) can be attached to, or removed from, the housing (3) without a tool.

9. Dosage-dispensing head (5) according to one of the claims 1 to 8, **characterized in that** the housing (3) of the dosage-dispensing head (5) is configured with a two-part design structure, wherein a first housing part (50) and a second housing part (60) can be joined together by means of a form-locking connection and without the need for a tool.

10. Dosage-dispensing head (5) according to claim 5, **characterized in that** the first housing part (50) and the second housing part (60) can be joined together by means of a snap connection.

11. Dosage-dispensing head (5) according to one of the claims 1 to 10, **characterized in that** the upper end of the shutter bolt (80), relative to the dispensing position, is guided in centered movement in an axial passage opening (66) of the dosage-dispensing head (5) by means of a preferably cylindrical shutter bolt cap (70).

12. Dosage-dispensing head (5) according to claim 11, **characterized in that** the shutter bolt cap (70) is designed to be slid over the upper end of the shutter bolt (80) and to be connected to the shutter bolt by way of a form-locking snap connection.

13. Dosage-dispensing head (5) according to claim 11, **characterized in that** the dosage-dispensing head comprises a return spring (100) in the form of a compressive helix spring which concentrically surrounds the shutter bolt (80), with a lower end of the return spring, relative to the dispensing position, being braced against the second housing part (60) and an upper end bearing against the shutter bolt cap (70), so that a pre-tensioning force of the return spring (100) pushes the shutter bolt (80) axially upwards into a rest position which is defined by an axial end stop (83) of the shutter bolt (80).

14. Dosage-dispensing head (5) according to one of the preceding claims, **characterized in that** the dosage-dispensing head (5) comprises an electrically conductive contact pad (53) serving to drain electrostatic charges from the dosage-dispensing head (5).

## Revendications

1. Tête de dosage (5) susceptible d'être insérée dans un dispositif de dosage (1) pour le dosage d'un produit à doser apte à s'écouler, et comprenant un boîtier (3) avec une chambre intérieure (59) recevant le produit à doser, une ouverture d'évacuation (62) et un mandrin de fermeture (80) agencé dans le boîtier (3), lequel peut être déplacé dans la direction d'un axe de mandrin de fermeture (81) pour ouvrir ou fermer l'ouverture d'évacuation (62) et pour désagréger et transporter le produit à doser, et être en rotation autour de l'axe de mandrin de fermeture (81), la tête de dosage (5) pouvant être mise dans une position de dosage dans laquelle le mandrin de fermeture (80) est orienté quasiment verticale pour le dosage du produit à doser à travers l'ouverture d'évacuation (62) située tout en bas de la tête de dosage (5), **caractérisée en ce que** la tête de dosage comprend une ouverture de remplissage, **en ce que** dans la position de dosage, l'ouverture de remplissage (57) est disposée sur le côté du boîtier (3) et s'étend quasiment verticalement, **en ce que** la tête de dosage (5) présente une surface de support (51) également disposée sur le côté dans la position de dosage et diamétralement opposée à l'ouverture de remplissage (57), **en ce que** la tête de dosage (5) peut être pivotée de 90° hors de la position de dosage, vers une position de remplissage différente de la position de dosage, pour le remplissage du produit à doser à travers l'ouverture de remplissage (57), la tête de dosage (5) pouvant reposer sur la surface de support (51) avec l'ouverture de remplissage (57) à présent disposée sur le haut tout en s'étendant quasiment horizontalement, **en ce que** l'ouverture de remplissage (57) peut être fermée au moyen d'un couvercle (90), **en ce que** la chambre intérieure (59) de la tête de dosage (5) présente une paroi intérieure cylindrique au moins dans la région de l'ouverture de remplissage (57), laquelle s'étend axialement dans la direction de l'ouverture d'évacuation, et **en ce qu'**une surface supérieure intérieure (91) du couvercle (90), tournée vers la chambre intérieure (59) dans l'état fermé, est également cylindrique et formée en affleurement à la suite de la paroi intérieure.

2. Tête de dosage (5) selon la revendication 1,
**caractérisée en ce qu'**au moins un élément agitateur (84) est formé sur le mandrin de fermeture (80), lequel sert à désagréger le produit à doser et à empêcher la formation de grumeaux.

3. Tête de dosage (5) selon la revendication 1 ou 2,
**caractérisée en ce qu'**un accouplement (85) est disposé à l'extrémité supérieure du mandrin de dosage (80) dans la position de dosage, lequel permet d'engager de façon amovible un arbre d'entraînement (11) du dispositif de dosage (1) pour entraîner un déplacement axial et une rotation du mandrin de fermeture (80).

4. Tête de dosage (5) selon l'une des revendications précédentes, **caractérisée en ce que** la tête de dosage (5) comprend une liaison à encliquetage (95, 96) entre le couvercle (90) et le boîtier (3), moyennant quoi le couvercle (90) est bloqué dans l'ouverture de remplissage (57) dans l'état fermé.

5. Tête de dosage (5) selon la revendication 4,
**caractérisée en ce que** l'ouverture de remplissage (57) et le couvercle (90) présentent des contours circonférentiels complémentaires s'étendant de façon continue.

6. Tête de dosage (5) selon la revendication 5,
**caractérisée en ce que** l'ouverture de remplissage (57) et le couvercle (90) présentent un contour circonférentiel elliptique.

7. Tête de dosage (5) selon l'une des revendications précédentes, **caractérisée en ce que** du côté de l'ouverture de remplissage (57), le boîtier (3) présente un renfoncement (52) servant de siège de réception pour le couvercle (90), dans lequel le couvercle (90) peut être monté lorsqu'il n'est pas inséré dans l'ouverture de remplissage (57).

8. Tête de dosage (5) selon l'une des revendications précédentes, **caractérisée en ce que** sur le boîtier (3) de la tête de dosage (5), il est prévu un logement (64) pour un moyen d'identification (4), dans lequel peuvent être enregistrées des données concernant la substance de dosage contenue dans la tête de dosage (5), et de plus **en ce que** le logement (64) et le moyen d'identification sont conçus de manière à ce que le moyen d'identification (4) puisse être fixé sans outil sur le boîtier (3) ou retiré de celui-ci.

9. Tête de dosage (5) selon l'une des revendication 1 à 8, **caractérisée en ce que** le boîtier (3) de la tête de dosage (5) est construit en deux parties, une première partie de boîtier (50) et une deuxième partie de boîtier (60) pouvant être assemblées entre elles par complémentarité de forme et sans outil.

10. Tête de dosage (5) selon la revendication 9,
**caractérisée en ce que** la première partie de boîtier (50) et la deuxième partie de boîtier (60) peuvent être assemblées entre elles par une liaison à encliquetage.

11. Tête de dosage (5) selon l'une des revendications 1 à 10, **caractérisée en ce que** l'extrémité supérieure du mandrin de fermeture (80) dans la position de dosage est guidée de façon centrée dans une ouverture de passage axiale (66) de la tête de dosage (5) au moyen d'un capuchon de mandrin de fermeture (70) de préférence cylindrique.

12. Tête de dosage (5) selon la revendication 11, **caractérisée en ce que** le capuchon de mandrin de fermeture (70) peut être enfoncé sur l'extrémité supérieure du mandrin de fermeture (80) dans la position de dosage, et relié au mandrin de fermeture par une liaison à encliquetage à complémentarité de forme.

13. Tête de dosage (5) selon la revendication 11, **caractérisée en ce qu'**un ressort de rappel (100) sous la forme d'un ressort de pression hélicoïdal entourant concentriquement le mandrin de fermeture (80) est monté dans la tête de dosage (5), lequel s'appuie avec son extrémité inférieure dans la position de dosage contre la deuxième partie de boîtier (60), et avec son extrémité supérieure dans la position de dosage contre le capuchon de mandrin de fermeture (70), et **en ce que** le mandrin de fermeture (80) est forcé axialement vers le haut vers une position de repos définie par une butée (83) du mandrin de fermeture (80), de par la précontrainte du ressort de rappel (100).

14. Tête de dosage (5) selon l'une des revendications précédentes, **caractérisée en ce que** la tête de dosage (5) présente un point de contact électriquement conducteur (53) pour la dissipation des charges électriques.
